# DEMANDE DE BREVET EUROPEEN

(11) **EP 3 922 357 A1**
(43) Date de publication de la demande: **15.12.2021**
(21) Numéro de dépôt: 21174218.4
(22) Date de dépôt: 17.05.2021
(51) Int. Cl.: B05B 7/00, B05B 15/25, E04F 21/08, B05B 7/14

(54) **DISPOSITIF DE PROJECTION D'UNE COMPOSITION DE LIANT MINÉRAL SOUS FORME DE PÂTE ET PROCÉDÉ DE PROJECTION ASSOCIÉ**

(30) Priorité: 19.05.2020 FR 2005120
(71) Demandeur: Isol Industries, 92240 Malakoff (FR)
(72) Inventeur: HAZERA, Julien, 92600 ASNIERES-SUR-SEINE (FR)
(74) Mandataire: Novagraaf Technologies

(57) **Abrégé**

La présente invention a pour objet un dispositif de projection d'une composition de liant minéral sous forme de pâte et à un procédé de projection utilisant un tel dispositif.

## Description

L'objet de la présente invention se rapporte à un dispositif de projection d'une composition de liant minéral sous forme de pâte et à un procédé de projection utilisant un tel dispositif.

Par liant minéral, on entend, au sens de la présente invention, les liants minéraux aériens qui durcissent à l'air (par une réaction de type carbonatation) tels que les argiles et les chaux aériennes, et les liants hydrauliques qui durcissent en milieu humide (par une réaction d'hydratation) tels que les chaux hydrauliques, les ciments (notamment les ciments Portland, les ciment alumineux), les plâtres et les laitiers.

De manière classique en soi, les dispositifs de projection de compositions de liant minéral ne permettent que de projeter des compositions fluides et non pâteuses, dans lesquels la composition de liant est transportée par soufflage ou aspiration d'air sous forme sèche ou injectant de l'air comprimé. Ainsi par exemple, la demande de brevet FR2947466 du demandeur décrit un dispositif de projection d'une composition fibreuse ou pulvérulente humidifiée comprenant un conduit de transport d'une composition fibreuse ou pulvérulente, et des moyens pour injecter une mousse aqueuse dans le conduit de transport via un conduit d'injection. Ce dispositif comporte des moyens pour injecter un air comprimé à l'intérieur du conduit de transport et des moyens pour injecter une mousse aqueuse dans le conduit de transport. Ce dispositif présente toutefois l'inconvénient de n'être pas adapté à la projection de compositions de liants minéraux se présentant sous forme pâteuse, l'air comprimé ne suffisant pas à projeter la pâte dans le conduit de transport. Par ailleurs, la demande de brevet américain US 2019/337189 décrit un procédé de moussage d'un matériau visqueux dans lequel on injecte de l'air comprimé.

Afin de remédier aux problèmes susmentionnés, le demandeur a transformé le dispositif de projection tel que décrit dans FR2947466 et remplacer le soufflage d'air comprimé par une pompe apte à aspirer une composition de liant minéral pâteuse et à la projeter à l'intérieur du dispositif.

Plus particulièrement, la présente invention a donc pour objet un dispositif de projection d'une composition de liant minéral sous forme de pâte, ledit dispositif comprenant :
- un conduit de transport de ladite composition de liant minéral sous forme de pâte, pourvu, en sortie, d'une buse de projection
- des moyens pour injecter une mousse aqueuse dans ledit conduit de transport par un conduit d'injection communiquant avec ledit conduit de transport via un récepteur,
ledit dispositif de projection étant caractérisé en ce qu'il comporte en outre :
- une pompe pour injecter et transporter ladite composition de liant minéral sous forme de pâte à l'intérieur dudit conduit de transport,
- dans le conduit de transport et en amont dudit récepteur, une première zone d'injection comportant une première hélice hélicoïdale pour cisailler la composition de liant minéral sous forme de pâte et former ainsi une composition fluide de liant minéral ;
- dans le conduit de transport et en aval dudit récepteur, une première zone de mélange située dans le prolongement de la première zone d'injection, pour mélanger la mousse aqueuse provenant du conduit d'injection avec la composition fluide de liant minéral,
- dans le conduit de transport et dans le prolongement de la première zone de mélange, une deuxième zone de mélange pour finaliser le mélange de la mousse aqueuse avec la composition fluide de liant minéral et former une mousse de liant minéral.

De manière avantageuse, la deuxième zone de mélange peut comporter une deuxième hélice hélicoïdale, pour renvoyer la mousse aqueuse vers l'intérieur de ladite deuxième zone de mélange, et en particulier à l'intérieur de la pâte, qui a tendance à rester au centre, de manière à favoriser un mélange plus intime de la mousse avec la pâte.

De manière avantageuse, les moyens pour injecter la mousse aqueuse dans le conduit de transport peuvent comporter une chambre de moussage comprenant des moyens pour faire mousser un agent liant additionné d'eau, la chambre de moussage débouchant directement dans le conduit de transport débouchant directement dans le conduit de transport par le récepteur.

De manière avantageuse, les moyens pour injecter la mousse aqueuse dans le conduit de transport peuvent comporter, outre la chambre de moussage :
- une première conduite d'amenée d'un agent liant additionné d'eau et éventuellement de tensioactifs, ladite première conduite d'amenée étant reliée à ladite chambre de moussage,
- une deuxième conduite d'amenée d'air comprimé, également reliée à ladite chambre de moussage, et
- une grille en mousse métallique disposée dans la chambre de moussage, de manière à être traversée par l'agent liant additionné d'eau et le cas échéant de tensioactifs et l'air comprimé et former ainsi une mousse aqueuse..

La présente invention a encore pour objet un procédé de projection d'une composition de liant minéral sous forme de pâte à l'aide du dispositif de projection selon l'invention, le procédé de projection selon l'invention comprenant les étapes suivantes :
- on injecte à l'aide d'une pompe, dans le conduit de transport, ladite composition de liant minéral sous forme de pâte ;
- oninjecte de la mousse aqueuse préalablement formée dans ladite chambre de moussage, dans ladite composition de liant minéral sous forme de pâte circulant dans le conduit de transport, par le conduit d'injection communiquant avec ledit conduit de transport ledit récepteur,
le procédé de projection selon l'invention étant caractérisé en ce qu'on cisaille ladite composition de liant minéral sous forme de pâte à l'aide de la première hélice hélicoïdale située dans le conduit de transport en amont dudit récepteur, pour former une composition fluide de liant minéral, afin de favoriser son mélange ultérieur avec ladite mousse aqueuse et former ainsi une mousse de liant minéral.

De préférence, on pourra cisailler, à l'aide d'une deuxième hélice située dans la deuxième zone de mélange, le mélange formé par la composition fluide de liant minéral et la mousse aqueuse afin d'homogénéiser la mousse de liant minéral.

De préférence, on pourra choisir le liant minéral parmi les argiles, les silicates, la bentonite, les ciments, les plâtres, les laitiers et les chaux hydrauliques.

De préférence, on pourra former la mousse aqueuse de la manière suivante dans la chambre de moussage : on dispose dans le conduit de la chambre de moussage une grille en mousse métallique (de préférence le long de la paroi du tube d'injection), de manière à être traversée par l'agent liant additionné d'eau et le cas échéant de tensioactifs et l'air comprimé et former ainsi une mousse aqueuse.

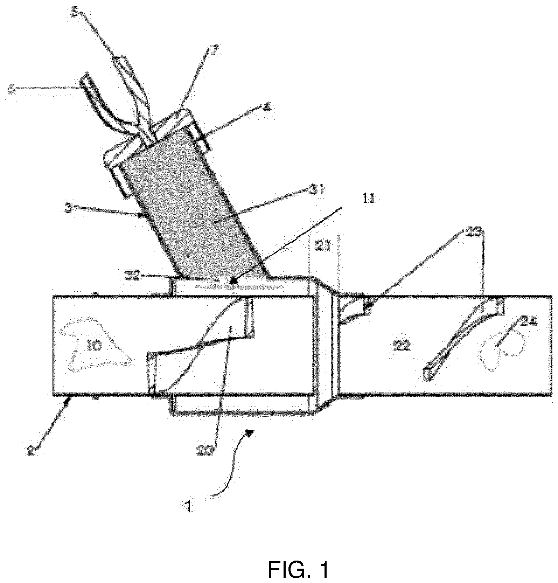

D'autres caractéristiques et avantages de l'invention ressortiront clairement de la description détaillée qui en est faite ci-après, à titre indicatif et nullement limitatif, en référence à la figure unique annexée [Fig 1].

[Fig 1] représente schématiquement une vue en coupe du dispositif de projection 1 selon l'invention qui comporte :
- un conduit de transport 2, à l'intérieur duquel on introduit une composition de liant minéral sous forme de pâte 10, ce conduit de transport 2 étant pourvu, en sortie, d'une buse de projection (non représentée sur [Fig 1]),
- une pompe (non représentée sur [Fig 1]) qui permet d'injecter et transporter la composition de liant minéral sous forme de pâte 10 dans le conduit de transport 2,
- des moyens 4, 5 6 pour injecter une mousse aqueuse 11 dans le conduit de transport 2 au travers d'un conduit d'injection 3 communiquant avec le conduit de transport 2 via un récepteur 32 ; [Fig 1] montre en particulier que les moyens 4, 5, 6 pour injecter la mousse aqueuse 11 dans le conduit de transport 2 peuvent être constitués par :
   ∘ une première conduite d'amenée 5 d'un agent liant additionné d'eau et éventuellement de tensioactifs, la première conduite d'amenée 5 étant reliée à ladite chambre de moussage 4 ;et
   ∘ une deuxième conduite d'amenée 6 d'air comprimé, également reliée à ladite chambre de moussage 4 ;
   ∘ une grille en mousse métallique 31 disposée dans la chambre de moussage 4 (le long des parois du tube d'injection 3), de manière à être traversée par l'agent liant additionné d'eau et le cas échéant de tensioactifs et l'air comprimé et former ainsi une mousse aqueuse 11 ;
- dans le conduit de transport 2 et en amont du récepteur 32, une première zone d'injection comportant une première hélice hélicoïdale 20 pour cisailler la composition de liant minéral sous forme de pâte 10 et former ainsi une composition fluide de liant minéral 10' ;
- dans le conduit de transport 2 et en aval du récepteur 32, une première zone de mélange 21 située dans le prolongement de la première zone d'injection, pour mélanger la mousse aqueuse 11 provenant du conduit d'injection 3 avec la composition fluide de liant minéral 10' ;
- dans le conduit de transport 2 et dans le prolongement de la première zone de mélange 21, une deuxième zone de mélange 22 pour finaliser le mélange de ladite mousse aqueuse 11 avec la composition fluide de liant minéral 10' et former une mousse de liant minéral 24; [Fig 1] montre qu'il est possible d'insérer, dans cette deuxième zone de mélange 22, une deuxième hélice hélicoïdale 23, pour renvoyer la mousse aqueuse 11 vers l'intérieur de la deuxième zone de mélange 22.

En fonctionnement, il est possible de projeter, à l'aide du dispositif de projection 1 selon l'invention tel que représenté sur [Fig 1], une composition de liant minéral sous forme de pâte 10, en procédant comme suit :
- on injecte à l'aide d'une pompe, dans la zone d'injection du conduit de transport 2, la composition de liant minéral sous forme de pâte 10 ;
- cette composition de liant minéral sous forme de pâte 10 est cisaillée par la première hélice hélicoïdale 20 située dans cette première zone d'injection ;
- en parallèle, on introduit de la mousse aqueuse 11 dans le conduit d'injection 3 communiquant avec le conduit de transport 2 via le récepteur 32 32, en injectant dans la première conduite d'amenée 5, un agent liant additionné d'eau et éventuellement de tensioactif et de l'air comprimé dans la deuxième conduite d'amenée 6, qui en traversant la grille en mousse métallique dans la chambre de moussage 4 , se transforment en mousse aqueuse 11 ;
- par ailleurs, on cisaille la composition de liant minéral sous la zone d'injection du conduit de transport en amont du récepteur 32, de manière à former une composition fluide de liant minéral 10',
- lorsque la composition fluide de liant minéral 10' quitte la première zone d'injection et pénètre dans la première zone de mélange 21 située dans le prolongement de la première zone d'injection, elle se mélange avec la mousse aqueuse 11 qui pénètre dans la première zone de mélange 21 au travers du récepteur 32 ;
- puis, le mélange de composition fluide de liant minéral 10' et de mousse aqueuse 11 quitte la première zone de mélange 21 et pénètre dans la deuxième zone de mélange 21, où il est cisaillé à l'aide de la deuxième hélice hélicoïdale 23 et forme ainsi une mousse de liant minéral 24.

## Revendications

1. Dispositif de projection (1) d'une composition de liant minéral sous forme de pâte (10), ledit dispositif comprenant :
- un conduit de transport (2) de ladite composition de liant minéral sous forme de pâte (10), pourvu, en sortie, d'une buse de projection
- des moyens (4, 5, 6) pour injecter une mousse aqueuse (11) dans ledit conduit de transport (2) par un conduit d'injection (3) communiquant avec ledit conduit de transport (2) via un récepteur (32),
ledit dispositif de projection (1) étant **caractérisé en ce qu'**il comporte en outre :
- une pompe pour injecter et transporter ladite composition de liant minéral sous forme de pâte (10) à l'intérieur dudit conduit de transport (2),
- dans ledit conduit de transport (2) et en amont dudit récepteur (32), une première zone d'injection comportant une première hélice hélicoïdale (20) pour cisailler ladite composition de liant minéral sous forme de pâte (10) et former ainsi une composition fluide de liant minéral (10') ;
- dans ledit conduit de transport (2) et en aval dudit récepteur (32), une première zone de mélange (21) située dans le prolongement de ladite première zone d'injection, pour mélanger ladite mousse aqueuse (11) provenant dudit conduit d'injection (3) avec ladite composition fluide de liant minéral (10'),
- dans ledit conduit de transport (2) et dans le prolongement de ladite première zone de mélange (21), une deuxième zone de mélange (22) pour finaliser le mélange de ladite mousse aqueuse (11) avec ladite composition fluide de liant minéral (10') et former une mousse de liant minéral (24).

2. Dispositif de projection (1) selon la revendication 1, dans lequel ladite deuxième zone de mélange (22) comporte une deuxième hélice hélicoïdale (23), pour renvoyer ladite mousse aqueuse (11) vers l'intérieur de ladite deuxième zone de mélange (22).

3. Dispositif de projection (1) selon l'une quelconque des revendications 1 et 2, dans lequel les moyens (4, 5, 6) pour injecter la mousse aqueuse dans le conduit de transport (2) comportent une chambre de moussage (4) comprenant des moyens pour faire mousser un agent liant additionné d'eau, la chambre de moussage (4) débouchant directement dans le conduit de transport (2) par ledit récepteur (32).

4. Dispositif de projection (1) selon la revendication 3, dans lequel lesdits moyens (4, 5, 6) pour injecter la mousse aqueuse dans le conduit de transport (2) comportent, outre la chambre de moussage (4) :
- une première conduite d'amenée (5) d'un agent liant additionné d'eau et éventuellement de tensioactifs, ladite première conduite d'amenée (5) étant reliée à ladite chambre de moussage (4),
- une deuxième conduite d'amenée 6 d'air comprimé, également reliée à ladite chambre de moussage (4), et
- une grille en mousse métallique (31) disposée dans la chambre de moussage (4), de manière à être traversée par l'agent liant additionné d'eau et le cas échéant de tensioactifs et l'air comprimé et former ainsi une mousse aqueuse (11).

5. Procédé de projection d'une composition de liant minéral sous forme de pâte (10) à l'aide du dispositif de projection (1) tel que défini selon l'une quelconque des revendications 1 à 4, ledit procédé comprenant les étapes suivantes :
- on injecte à l'aide d'une pompe, dans le conduit de transport (2), ladite composition de liant minéral sous forme de pâte (10) ;
- on injecte de la mousse aqueuse (11) préalablement formée dans ladite chambre de moussage (4), dans ladite composition de liant minéral sous forme de pâte (10) circulant dans le conduit de transport (2), par le conduit d'injection (3) communiquant avec ledit conduit de transport (2) via ledit récepteur (32),
ledit procédé étant **caractérisé en ce qu'**on cisaille ladite composition de liant minéral sous forme de pâte (10) à l'aide de la première hélice hélicoïdale (20) située dans le conduit de transport en amont dudit récepteur (32), pour former une composition fluide de liant minéral (10'), afin de favoriser son mélange ultérieur avec ladite mousse aqueuse (11) et former ainsi une mousse de liant minéral (24).

6. Procédé selon la revendication 5, dans lequel on cisaille, à l'aide d'une deuxième hélice hélicoïdale (23) située dans la deuxième zone de mélange (22), le mélange formé par la composition fluide de liant minéral (10') et ladite mousse aqueuse (11).

7. Procédé selon les revendications 5 ou 6, selon lequel le liant minéral est choisi parmi les argiles et notamment la bentonite, les silicates, les ciments, les plâtres, les laitiers et les chaux hydrauliques.

8. Procédé selon l'une quelconque des revendications 5 à 7, selon lequel la mousse aqueuse (11) est formée dans ladite chambre de moussage (4) en utilisant une grille en mousse métallique (31) disposée dans la chambre de moussage (4), de manière à être traversée par l'agent liant additionné d'eau et le cas échéant de tensioactifs et l'air comprimé et former ainsi une mousse aqueuse (11).
